# EUROPEAN PATENT SPECIFICATION

(11) **EP 2 816 508 B1**
(45) Date of publication and mention of the grant of the patent: **13.07.2016**
(21) Application number: 14171640.7
(22) Date of filing: 09.06.2014
(51) Int. Cl.: G06K 19/077, B27M 3/00, G09F 3/00

(54) **A RFID traceable identification device for wood**
RFID-verfolgbare Identifizierungsvorrichtung für Holz
Dispositif d'identification homologuée RFID pour le bois

(30) Priority: 21.06.2013 SI 201300164
(43) Date of publication of application: 24.12.2014
(73) Proprietor: Stegel, Simon, 6258 Prestranek (SI)
(72) Inventor: Stegel, Simon, 6258 Prestranek (SI)
(74) Representative: Flak, Antonija

(56) References cited:
- EP-A1- 2 207 130
- DE-A1-102006 015 899
- DE-A1-102006 035 582
- DE-A1-102009 045 186
- DE-A1-102012 022 894
- DE-U1- 9 300 444
- DE-U1-202005 020 427
- FR-A1- 2 697 801
- FR-A1- 2 810 436
- FR-A1- 2 902 222
- US-A- 4 908 503
- US-A1- 2002 170 213
- US-A1- 2010 213 264
- US-B1- 6 239 737

## Description

The present invention refers to a RFID traceable identification device for wood.

Several solutions of RFID identification devices are known.

From FR 2 697 801 a RFID traceable transponder located in the corner of a pallet is known, which contains a processor, a memory and an antenna forming a resonant circuit with a capacitor. These contents are inside of a body having a tip for facilitated driving of the transponder into the wood.

From FR 2 810 436 a RFID transponder for marking sawn wood or trees shaped as a nail is known, which also has a tip for easier insertion into the wood as well as a receiving-emitting antenna connected to a processor and a memory module.

Documents DE 10 2006 035 582 and DE 10 2009 045 186 disclose RFID tags having an antenna, a processor, a memory module and an oscillating circuit formed by them.

Known identification devices for wood are formed in a manner that they must be removed before processing the wood. This feature is a time-consuming step resulting in a rather high-priced solution.

It is the object of the present invention to create a RFID traceable identification device for wood which remedies the drawbacks of the known solutions.

The invention is defined by claim 1. Preferred embodiments are set out in the dependent claims.

The object as set above is solved according to the present invention by an identification device for wood made of a material having as similar characteristics as possible to wood. An appropriate material is cellulose reinforced by means of a binding agent, a fibre mesh-work and similar. The identification device *per se* is formed so as to exert least effort when driven into the wood to be marked allowing easy insertion. It has been proven as the most appropriate if the preferred embodiment resembles a form of a wedge, a nail or similar. In order to record required data about the wood an appropriate memory module is comprised within said identification device, said memory module communicating externally by means of radio waves.

The invention is further described in detail by way of non-limiting embodiments, and with a reference to the accompanying drawings, where
- Fig. 1: shows a three dimensional view of an identification device,
- Fig. 2: shows a second embodiment of the identification device.

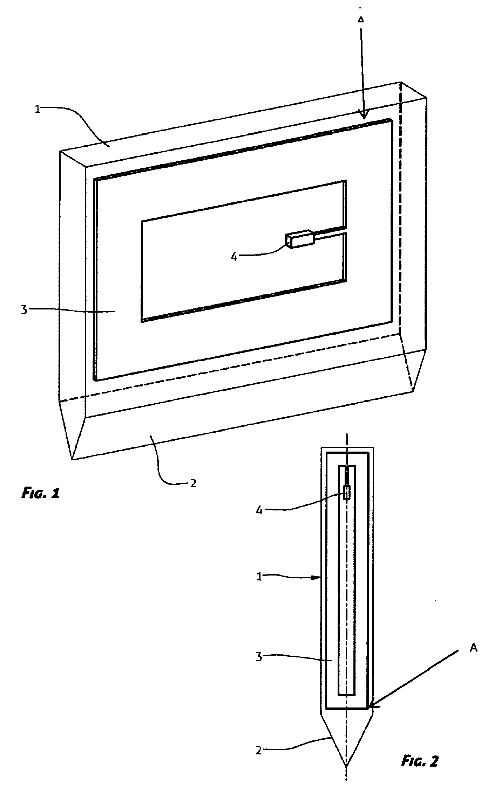

An identification device according to the invention comprises a body 1 having at the first end a shape of a tip 2 to facilitate insertion of the device into the wood to be marked. Said body 1 may be formed as a flat element such as a relatively thin plate for example (cf. Fig. 1), or as a longitudinal element such as a nail for example comprising a suitable cross-section and longitudinal extension such as a cylindrical nail for instance (cf. Fig. 2), a pyramid shaped nail and similar. In case the device is formed as a thin plate it has the following proportions:
- width of the body (1) is approximately one tenth of its length, and
- height of the body (1) is approximately two thirds of its length.

Said body 1 is made of a substance which on one hand enables a rather high strength in order for the identification device to be rather effortlessly driven into the wood, and enables on the other hand further processing and, respectively, treatment of the wood marked with the identification device according to the invention, without a necessity to remove said identification device before further treatment. It is provided for according to the present invention, that said device has an outer part A made of a laminate consisting of a cellulose or a cotton mesh-work, and of a binding agent, preferably phenol or epoxy resin.

Inside the said body 1 a receiving-emitting antenna 3 is arranged, which is connected to a processor and a memory module 4 being preferably formed as a micro-electronic module. The said micro-electronic module 4 forms together with the said antenna 3 an oscillating circuit gauged to the required frequency. Said antenna 3 is formed of a thin and flat laminate covered on both sides with a thin layer of a conductive material such as copper, aluminium or similar. Said laminate for the antenna 3 is made of a fibre mesh-work, preferably a cotton mesh-work, optionally reinforced by means of a web of artificial fibres, preferably glass fibres, and reinforced by means of a binding agent, preferably phenol or epoxy resin. Each conductive material layer is formed by means of a process known *per se* into a planar spiral, wherein all conductive material layers together represent a bipolar antenna 3. Said antenna 3 is surrounded with the outer part A thereby forming a single integral element.

In order to ease and facilitate insertion of the said identification device according to the invention into the wood, a plurality of identification devices can be stacked one upon other in the sense of a magazine that can be used with a device for driving fixing elements.

The identification device according to the invention is suitable to be inserted into wood for further processing without any need for the identification device to be removed prior to the processing. The identification device according to the invention represents no obstacle for any of the processing machines used for wood processing, since it is entirely made of materials that offer very little resistance to the woodworking tools, yet at the same time enable easy insertion into the wood to be marked.

## Claims

1. A RFID traceable identification device for wood,
said device comprising a body (1), which is at the first end of the body formed as a tip (2) to facilitate driving the device into the wood to be marked,
wherein inside said body (1) a receiving-emitting antenna (3) connected to a processor and memory module (4) is arranged,
said module (4) forming together with said antenna (3) an oscillating circuit,
**characterized in that**
the device is formed as a flat element,
wherein its outer part (A) is made of a laminate consisting of cellulose or a cotton mesh-work and of a binding agent, preferably phenol or epoxy resin,
the device allowing insertion into the wood and further processing of the wood without the need to remove the identification device before further treatment.

2. Identification device for wood according to claim 1, **characterized in that** said antenna (3) is made of a thin and flat laminate covered on both sides with a thin layer of a conductive material, preferably with copper, aluminium or similar,
wherein each conductive layer is formed as a spiral and wherein all conductive layers together represent a bipolar antenna (3), which is surrounded with said outer part (A) of the device, thereby forming a single integral element.

3. Identification device for wood according to claim 2, **characterized in that** said laminate for antenna (3) is made of a fibre mesh-work, preferably of a cotton mesh-work, optionally reinforced by means of a web of artificial fibres such as glass fibres, and reinforced by means of a binding agent, preferably phenol or epoxy resin.

4. Identification device for wood according to any of the preceding claims, **characterized in that** a plurality of said identification devices may be stacked one upon other in the sense of a magazine that can be used with a device for driving fixing elements.

5. Identification device for wood according to any of the claims from 1 to 3, **characterized in that** the said device is formed as a rod, preferably as a cylindrical nail, a pyramid shaped nail and similar.

## Patentansprüche

1. RFID-verfolgbare Identifikationsvorrichtung für Holz, wobei die Vorrichtung einen Körper (1) umfasst, der an ersten Ende des Körpers als Spitze (2) ausgebildet ist und zum Hineindrücken der Vorrichtung in das zu markierende Holz dient, wobei im Inneren des Körpers (1) eine Empfangs- und Sendeantenne (3), die mit einem Prozessor und einem Speichermodul (4) verbunden ist, angeordnet ist, wobei das Modul (4) samt der Antenne (3) einen Schwingkreis bildet, **dadurch gekennzeichnet, dass** die Vorrichtung als ein flaches Element ausgeführt ist, dessen Außenteil (A) aus einem aus Zellulose oder einem Baumwolle-Maschenwerk sowie einem Bindemittel, vorzugsweise Phenol- oder Epoxidharz, bestehenden Laminat ausgefertigt ist, wobei die Vorrichtung die Einführung ins Holz und die Weiterverarbeitung des Holzes ohne die Notwendigkeit der Entnahme der Identifikationsvorrichtung vor der Weiterbehandlung ermöglicht.

2. Identifikationsvorrichtung für Holz nach Anspruch 1, **dadurch gekennzeichnet, dass** die Antenne (3) aus einem dünnen und flachen Laminat besteht, das auf beiden Seiten mit einer dünnen Schicht eines leitenden Materials, vorzugsweise mit Kupfer, Aluminium oder dergleichen, beschichtet ist, wobei jede leitende Schicht als eine Spirale ausgebildet ist und wobei alle leitenden Schichten zusammen eine bipolare Antenne (3), die von dem Außenteil (A) der Vorrichtung umgeben ist, darstellen, um somit ein integrales Einzelelement zu bilden.

3. Identifikationsvorrichtung für Holz nach Anspruch 2, **dadurch gekennzeichnet, dass** das Laminat für die Antenne (3) aus einem Faser-Maschenwerk, vorzugsweise einem Baumwolle-Maschenwerk gefertigt ist, das gegebenenfalls mittels eines Maschenwerks aus Kunstfasern, wie z.B. Glasfasern verstärkt ist, und das mit einem Bindemittel, vorzugsweise Phenol- oder Epoxidharz, verstärkt ist.

4. Identifikationsvorrichtung für Holz nach irgendeinem der vorherigen Ansprüche, **dadurch gekennzeichnet, dass** eine Mehrzahl von Identifikationsvorrichtungen wie in einem Magazin übereinander gestapelt werden kann, das mit der Vorrichtung zur Einführung der Befestigungselemente anwendbar ist.

5. Identifikationsvorrichtung für Holz nach einem der Ansprüche 1 bis 3, **dadurch gekennzeichnet, dass** die Vorrichtung als ein Stab, vorzugsweise als ein zylindrischer Nagel, ein pyramidenförmiger Nagel und dergleichen, ausgebildet ist.

## Revendications

1. Dispositif d'identification homologuée RFID pour le bois, ledit dispositif comportant un corps (1) dont la première extrémité est formée comme une pointe (2) pour faciliter l'enfoncement du dispositif dans le bois à marquer, une antenne émettrice-réceptrice (3) reliée à un processeur et à un module de mémoire (4) étant disposée dans ledit corps (1), ledit module (4) formant avec ladite antenne (3) un circuit oscillant, **caractérisé en ce que** le dispositif se présente sous la forme d'un élément plat, sa partie extérieure (A) étant constituée d'un laminé composé de cellulose ou d'un maillage de coton et d'un agent liant, de préférence une résine phénolique ou époxy, le dispositif permettant l'introduction dans le bois et le traitement ultérieur du bois sans qu'il soit nécessaire de retirer le dispositif d'identification avant du traitement ultérieur.

2. Dispositif d'identification pour le bois selon la revendication 1, **caractérisé en ce que** ladite antenne (3) est constituée d'un laminé plat et mince recouvert des deux côtés par une couche mince de matériau conducteur, de préférence du cuivre, de l'aluminium ou similaire, chaque couche conductrice ayant une forme de spirale et toutes les couches conductrices représentant conjointement une antenne bipolaire (3) entourée par ladite partie extérieure (A) du dispositif, formant ainsi un élément intégré unique.

3. Dispositif d'identification pour le bois selon la revendication 2, **caractérisé en ce que** ledit laminé pour l'antenne (3) est constitué d'un maillage de fibres, de préférence d'un maillage de coton, éventuellement renforcé par un réseau maillé de fibres artificielles telles que des fibres de verre, et renforcé par un agent liant, de préférence une résine phénolique ou époxy.

4. Dispositif d'identification pour le bois selon l'une quelconque des revendications précédentes **caractérisé en ce que** une pluralité desdits dispositifs d'identification peuvent être empilés les uns sur les autres dans le sens d'un magasin qui peut être utilisé avec un dispositif servant à enfoncer des éléments de fixation.

5. Dispositif d'identification pour le bois selon les revendications 1 à 3, **caractérisé en ce que** ledit dispositif se présente sous la forme d'une tige, de préférence sous la forme d'un clou cylindrique, d'un clou pyramidal et similaire.
